Europäisches Patentamt

European Patent Office

Office européen des brevets

(19)

(11) Numéro de publication : **0 432 009 A1**

# (12) DEMANDE DE BREVET EUROPEEN

(21) Numéro de dépôt : 90403327.1

(22) Date de dépôt : 23.11.90

(51) Int. Cl.⁵ : **H01S 3/109**

(30) Priorité : 01.12.89 FR 8915877

(43) Date de publication de la demande :
**12.06.91 Bulletin 91/24**

(84) Etats contractants désignés :
**DE FR GB**

(71) Demandeur : **THOMSON-CSF
51, Esplanade du Général de Gaulle
F-92800 Puteaux (FR)**

(72) Inventeur : **Papuchon, Michel
THOMSON-CSF, SCPI, Cédex 67
F-92045 Paris la Défense (FR)**
Inventeur : **Huignard, Jean-Pierre
THOMSON-CSF, SCPI, Cédex 67
F-92045 Paris la Défense (FR)**
Inventeur : **Lallier, Eric
THOMSON-CSF, SCPI, Cédex 67
F-92045 Paris la Défense (FR)**
Inventeur : **Pocholle, Jean-Paul
THOMSON-CSF, SCPI, Cédex 67
F-92045 Paris la Défense (FR)**

(74) Mandataire : **Guérin, Michel et al
THOMSON-CSF SCPI
F-92045 PARIS LA DEFENSE CEDEX 67 (FR)**

(54) Source optique miniature, et procédé de réalisation.

(57)    Source optique miniature comprenant :
- au moins une couche mince (1) d'un matériau actif laser présentant en outre des caractéristiques de non linéarité ;
- un laser de pompe (2) émettant un faisceau d'une longueur d'onde permettant de pomper la couche mince (1) de matériau actif laser perpendiculairement au plan de la couche mince (1) ;
- une cavité optique constituée de deux miroirs (3, 4) dont les coefficients de réflexion sont maximum à la longueur d'onde laser du matériau actif laser.
**APPLICATIONS : LASER EMETTANT DANS LE VISIBLE ET DE REALISATION COMPACTE**

EP 0 432 009 A1

## SOURCE OPTIQUE MINIATURE ET PROCEDE DE REALISATION

L'invention concerne une source optique miniature et plus particulièrement une source optique miniature émettant à des longueurs d'ondes situées dans la gamme des longueurs d'ondes du visible. L'invention concerne également un procédé de réalisation d'une telle source lumineuse.

Les sources miniatures émettant dans le visible ont un grand intérêt par exemple dans le domaine de l'enregistrement/lecture de l'information sous forme optique. Dans ce cas, plus la longueur d'onde optique utilisée sera courte, plus la densité d'information possible sera importante.

Plusieurs solutions peuvent être envisagées telles que la réalisation d'un laser émettant directement dans le visible ou l'utilisation des principes de l'optique non linéaire pour générer une onde optique dans le visible à partir d'une onde proche infrarouge.

Il est clair qu'il est important de pouvoir concevoir une telle source miniaturisée. Selon l'invention on propose une solution permettant d'aboutir à ces résultats en employant la technique suivante : réalisation d'un laser solide pompé par une diode laser, le milieu actif étant également non linéaire et sous forme d'une lame mince qui peut être couplée optiquement à la source de pompe sans élément intermédiaire.

Plus précisément, l'invention concerne une source optique miniature, caractérisée en ce qu 'elle comprend :

- au moins une couche mince d'un matériau actif laser présentant en outre des caractéristiques de non linéarité ;
- un laser de pompe émettant un faisceau d'une longueur d'onde permettant de pomper la couche mince de matériau actif laser perpendiculairement au plan de la couche mince ;
- une cavité optique constituée de deux miroirs dont les coefficients de réflexion sont maximum à la longueur d'onde laser du matériau actif.

L'invention concerne également un procédé de réalisation d'une source optique miniature, caractérisé en ce qu'il comporte les étapes de réalisation suivantes :

- réalisation d'une lame en matériau actif laser à une fréquence déterminée présentant des caractéristiques de non linéarité à cette fréquence déterminée ;
- traitement des faces principales de la lame de façon à ce qu'elles possèdent un coefficient de réflectivité maximum, pour des ondes lumineuses à la fréquence déterminée ;
- découpe de la lame ainsi traitée en éléments ;
- association de chaque élément obtenu à la face de sortie d'un laser de pompe.

Les différents objets et caractéristiques de l'invention apparaîtront plus clairement dans la description qui va suivre faite à titre d'exemple en se reportant aux figures annexées qui représentent :

- la figure 1, un exemple de réalisation de la source optique selon l'invention ;
- la figure 2, une variante de l'exemple de réalisation de la figure 1 ;
- la figure 3, un autre exemple de réalisation de la source optique selon l'invention ;
- la figure 4, un procédé de réalisation de la source optique selon l'invention ;
- les figures 5 et 6, des variantes de réalisation du dispositif de l'invention.

Il a été démontré récemment qu'il était possible d'obtenir l'effet laser dans une plaque mince de YAG dopé au Néodyme pompé par un faisceau émis par une diode laser. Dans cette expérience, les miroirs nécessaires à la cavité sont réalisés directement sur le matériau et celui-ci peut être couplé directement au laser semiconducteur de pompage.

On propose, selon l'invention de réaliser une source émettant dans le visible en réalisant la plaque mince de matériau actif avec un matériau qui est non linéaire et qui peut donc effectuer des opérations de doublage de fréquence pour transformer une onde infrarouge en une onde visible.

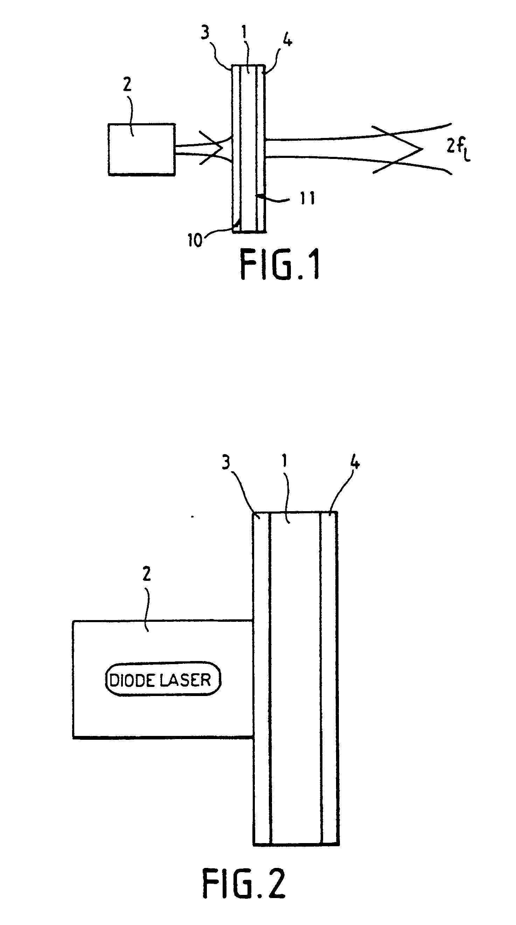

La figure 1 représente un exemple de réalisation de la source optique miniature selon l'invention comportant un élément 1 en matériau non linéaire dont les faces planes 10 et 11 sont munies de miroirs ou de surfaces réfléchissantes 3 et 4, ayant un coefficient de réflectivité maximum pour une longueur d'onde fondamentale correspondant à une fréquence $f_i$ déterminée. Ces surfaces réfléchissantes sont obtenues de préférence par un traitement approprié des faces 10 et 11.

Un laser de pompe 2 émet un faisceau lumineux de fréquence $f_p$.

Le matériau de la couche 1 et l'épaisseur de cette couche sont choisis de façon à présenter :

- d'une part un effet laser à la fréquence lumineuse $f_i$ ;
- et d'autre part un effet de doublage de fréquence par effet non linéaire.

Dans ces conditions, la couche 1 génère à partir de l'onde de pompe à la fréquence $f_p$, une onde à la fréquence de deuxième harmonique $2 f_i$.

Comme la plaque de ce matériau peut être très mince (épaisseur inférieure à 1 mm par exemple, ou environ 100 micromètres), ce dispositif est très compact et présente en fait une surface active très faible ce qui signifie que de nombreux dispositifs identiques peuvent être fabriqués collectivement.

De plus le fait d'employer des épaisseurs faibles de matériau peut éviter l'utilisation d'optiques intermédiaires entre le laser de pompe et la plaque active et non linéaire. Par exemple, cette plaque pourrait être très proche de la face de sortie du laser de pompe ce qui diminue la taille du faisceau dans la plaque, comme cela est représenté en figure 2.

Le matériau actif et non linéaire 1 peut être constitué de Nd : YAl$_3$(BO$_3$)$_4$ ou de LiNbO3 dopé au Néodyme par exemple. Dans le cas du LiNbO$_3$, pour être plus précis, la normale à la lame mince 1 pourra présenter un angle d'environ 80° par rapport à l'axe optique du cristal constituant la lame 1 si l'on désire effectuer l'accord de phase pour une onde fondamentale générée par effet laser ayant une longueur d'onde d'environ 1.06/1.09 micromètres. Dans le cas du Nd : YAl$_3$(BO$_3$)$_4$, la normale à la plaque et l'axe optique du matériau doivent présenter un angle de 32° environ pour obtenir l'accord de phase entre une onde à 1.06 micromètres et 0,53 micromètres.

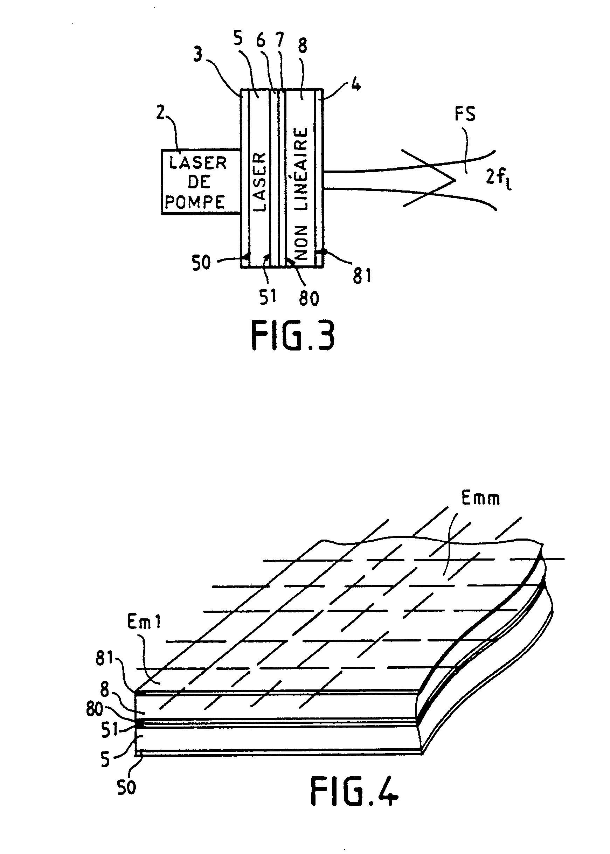

Dans une autre configuration, telle que représentée en figure 3, les matériaux actifs laser et non linéaires peuvent être séparés. Dans ce cas des lames minces peuvent encore être utilisées et placées l'une contre l'autre. Plusieurs types de montages peuvent alors être considérés :

- la lame laser est traitée réfléchissante au rayonnement fondamental et la lame non linéaire est traitée réfléchissante soit au rayonnement fondamental soit au rayonnement harmonique.

- la lame laser est traitée réfléchissante sur une face et antireflet sur l'autre et de même pour la lame non linéaire.

Selon l'exemple de réalisation de la figure 3, la source optique selon l'invention comporte :

- une source laser de pompe 2 émet un faisceau lumineux de pompe à la fréquence fondamentale f$_p$ ;

- une lame 5 en matériau actif laser recevant le faisceau de pompe par sa face 50 et présentant un effet laser à la fréquence lumineuse f$_i$ ;

- une lame 8 en matériau non linéaire, accolée à la lame 5 et présentant un effet non linéaire à la fréquence lumineuse f$_i$ de façon à générer une onde lumineuse à la fréquence 2 f$_i$.

La face d'entrée 50 de la lame 1 est munie d'un moyen réfléchissant ou est traitée de façon à laisser entrer le faisceau de pompe à la fréquence f$_p$ mais à réfléchir vers l'intérieur de la lame 5 les ondes lumineuses à la fréquence f$_i$.

Les faces 51 et 80 des lames 5 et 8 sont traitées antiréfléchissantes notamment aux fréquences f$_i$ et 2f$_i$ avant qu'elles ne soient accolées l'une à l'autre. De cette façon l'interface pouvant exister entre les deux lames ne produit aucun effet sur la circulation des ondes lumineuses de fréquences f$_i$ et 2f$_i$ à l'intérieur du dispositif.

La face 81 de la lame 8 servant de face de sortie pour le faisceau FS à la fréquence 2f$_i$ fourni par la source lumineuse selon l'invention, est muni d'un moyen réfléchissant les ondes lumineuses à la fréquence f$_i$. Ce moyen réfléchissant peut être réalisé sous la forme d'un traitement de la face 81.

Les faces 50 et 81, selon l'exemple de réalisation de la figure 3, constituent donc une cavité optique pour la lame en matériau actif laser 5.

La face 81 peut en outre présenter un coefficient de réflectivité minimum pour la fréquence lumineuse 2f$_i$.

L'association des deux lames constitue donc un laser avec un dispositif doubleur de fréquence intracavité.

L'avantage d'une telle configuration réside dans la possibilité d'optimiser séparément le laser et le doubleur de fréquence tout en conservant le caractère compact du dispositif.

Par ailleurs, selon l'invention, on prévoit de réaliser collectivement des sources optiques telles que décrites précédemment. Pour cela on réalise une lame en matériau actif laser à la fréquence fondamentale f$_i$ et présentant un effet de non linéarité à cette fréquence. Les faces principales de la lame sont traitées (dépôt de couches réfléchissantes) de façon à avoir un coefficient de réflectivité maximale à la fréquence f$_i$.

La lame est ensuite découpée en éléments et chaque élément est accolée à une face de sortie d'un laser de pompe.

Selon un autre procédé de réalisation conçu pour la fabrication de source du type représenté en figure 3, on fabrique une lame en matériau actif lame 5. Une couche 3 en matériau réfléchissant à la fréquence f$_i$ est déposée sur la face 50 de la lame 5 tandis que la face 51 reçoit une couche 6 d'un matériau antiréfléchissant notamment à la fréquence f$_i$.

Par ailleurs, une plaque 8 en matériau non linéaire est fabriquée. Sa face 80 est traitée de façon à être antiréfléchissante, notamment aux fréquences f$_i$ et 2f$_i$, par dépôt d'une couche 7 d'un matériau antiréfléchissant.

La face 81 est traitée réfléchissante à la fréquence lumineuse f$_i$ par dépôt d'une couche 4 possédant un coefficient de réflectivité maximum à la fréquence f$_i$ et minimum à la fréquence 2f$_i$.

Les deux lames 5 et 8 sont accolées l'une à l'autre par leurs faces 51 et 80.

Elles sont ensuite découpées en éléments Em1, Emn comme cela est représenté par les traits interrompus sur la figure 4 et chaque élément est accolé par sa face 50 à une face émissive d'un laser de pompe 2.

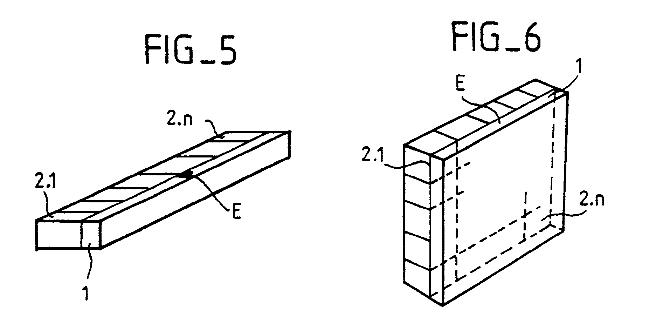

Selon une variante de réalisation de l'invention représentée en figure 5 on prévoit de réaliser une barette de diodes lasers de pompage 2.1 à 2.m et d'associer à la face d'émission de cette barette, une lame telle que décrite précédemment. La structure de la figure 5 comporte donc la barette de lasers 2.1 à 2.n émettant par sa face E. Une lame 1 en matériau actif laser et présentant une non linéarité, et dont les faces ont été convenablement traitées, est accolée à la face E de la barette laser.

Selon l'exemple représenté en figure 6, cette conception peut être étendue à une structure comportant une matrice de lasers 2.1 à 2.n. A la face d'émission E de cette matrice est accolée une lame 1 telle que décrite précédemment.

Dans les exemples de réalisation des figures 5 et 6 la lame 1 peut être réalisée à l'aide de deux lames comme cela a été décrit en relation avec la figure 3.

Il est bien évident que la description qui précède n'a été faite qu'à titre d'exemple non limitatif et que d'autres variantes peuvent être envisagées sans sortir du cadre de l'invention. Les exemples numériques et la nature des matériaux indiqués n'ont été fournis que pour illustrer la description.

## Revendications

1. Source optique miniature caractérisée en ce qu'il comprend :
   - au moins une couche mince (1) d'un matériau actif laser présentant en outre des caractéristiques de non linéarité ;
   - un laser de pompe (2) émettant un faisceau d'une longueur d'onde permettant de pomper la couche mince (1) de matériau actif laser perpendiculairement au plan de la couche mince (1) ;
   - une cavité optique constituée de deux miroirs (13, 14) dont les coefficients de réflexion sont maximum à la longueur d'onde laser du matériau actif.

2. Source optique selon la revendication 1, caractérisée en ce que l'un des miroirs (4) possède un coefficient de réflexion minimum à la longueur d'onde du deuxième harmonique de la longueur d'onde laser.

3. Source optique selon la revendication 1, caractérisée en ce que les miroirs de la cavité optique sont constitués par les faces planes opposées de la couche mince (1) de matériau actif laser et qui ont été traitées de façon à être réfléchissantes à la longueur d'onde laser.

4. Source optique selon la revendication 1, caractérisée en ce que la couche mince (1) de matériau actif laser présentant une non linéarité est du Nd : YAl$_3$(BO$_3$)$_4$ ou du Nd : LiNbO$_3$.

5. Source optique selon la revendication 1, caractérisée en ce que la couche mince (1) de matériau actif laser présente une non linéarité a une épaisseur inférieure à 1 mm.

6. Source optique selon la revendication 4, caractérisée en ce que la couche mince (4) de matériau actif laser étant du Nd : LiNbO$_3$, la normale au plan de la couche mince (1) fait un angle d'environ 80° par rapport à l'axe optique du cristal, le laser émettant à une longueur d'onde d'environ 1,05 à 1,09 micromètres.

7. Source optique selon la revendication 4, caractérisée en ce que la couche mince (1) étant du Nb : YAl$_3$(BO$_3$)$_4$, la normale au plan de la couche mince fait un angle d'environ 32° par rapport à l'axe optique du cristal, le laser de pompe émettant à une longueur d'onde d'environ 1,06 micromètres.

8. Source optique selon la revendication 1, caractérisée en ce que la couche mince (1) comporte au moins une couche mince d'un matériau actif laser (5) et une couche mince (8) d'un matériau présentant des caractéristiques optiques non linéaires.

9. Source optique selon la revendication 8, caractérisée en ce que la couche mince (5) de matériau actif laser et la couche (8) de matériau non linéaire ont leurs faces (6, 7) en contact l'une de l'autre traitées antireflet à la longueur d'onde laser et à la longueur d'onde du deuxième harmonique.

10. Procédé de réalisation d'une source optique miniature selon la revendication 1, caractérisé en ce qu'il comporte les étapes de réalisation suivantes :
    - réalisation d'une lame (1) en matériau actif laser à une fréquence déterminée (f) présentant des caractéristiques de non linéarité à cette fréquence déterminée (f) ;
    - traitement des faces principales de la lame (1) de façon à ce qu'elles possèdent un coefficient de réflectivité maximum pour des ondes lumineuses à la fréquence déterminée (f$_i$) ;
    - découpe de la lame (1) ainsi traitée en éléments ;
    - association de chaque élément obtenu à la face de sortie d'un laser de pompe (2).

11. Procédé selon la revendication 10, caractérisé en ce que l'étape de réalisation de la lame en matériau actif laser présentant des caractéristiques de non linéarité comporte les étapes auxiliaires suivantes :
    - réalisation d'une lame (5) en matériau actif laser suivie d'un traitement d'une face (50) de cette lame de façon à ce qu'elle soit réfléchissante à ladite fréquence déterminée (f$_i$) et d'un traitement de l'autre face (51) de cette lame de façon qu'elle soit antiréfléchissante ;

- réalisation d'une lame (8) en matériau actif laser suivie d'un traitement d'une face (80) de cette lame de façon à ce qu'elle soit antiréfléchissante et d'un traitement de l'autre face (81) de façon qu'elle soit réfléchissante à ladite fréquence déterminée (f$_l$) ;

- association des deux lames (5, 8) par leurs faces (51, 80) qui ont été traitées antiréfléchissantes.

FIG.1

FIG.2

FIG.3

FIG.4

FIG_5

FIG_6

2.n

2.1

E

1

E

1

2.1

2.n

Office européen
des brevets

**RAPPORT DE RECHERCHE EUROPEENNE**

Numero de la demande

EP 90 40 3327

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.5) |
| X | EP-A-0 327 310 (MASSACHUSETTS INSTITUTE OF TECHNOLOGY) * Figure 3 * | 1,3,5, 10,11 | H 01 S 3/109 |
| Y | | 2,4,6-9 | |
| Y | US-A-4 731 787 (T.Y. FAN et al.) * Colonne 2, lignes 3-5; colonne 3, lignes 33-41 * | 2,4,6 | |
| Y | LEOS '88 LASERS AND ELECTRO-OPTICS SOCIETY ANNUAL MEETING CONFERENCE PROCEEDINGS, Santa Clara, California, 2-4 novembre 1988, pages 352-355; J.T. LIN: "Recent advances of nonlinear optical crystals" * Abrégé; page 355, tableau 2 * | 4,6,7 | |
| Y | US-A-4 884 281 (P.S. HAWTHORN et al.) * Abrégé; figures 1-4 * | 8,9 | |
| | | | DOMAINES TECHNIQUES RECHERCHES (Int. Cl.5) |
| | | | H 01 S G 02 F |

Le présent rapport a été établi pour toutes les revendications

| Lieu de la recherche | Date d'achèvement de la recherche | Examinateur |
|---|---|---|
| LA HAYE | 13-03-1991 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P0402)